# EUROPÄISCHE PATENTSCHRIFT

(11) **EP 0 931 375 B1**
(45) Veröffentlichungstag und Bekanntmachung des Hinweises auf die Patenterteilung: **24.01.2001**
(21) Anmeldenummer: 97945735.5
(22) Anmeldetag: 10.10.1997
(51) Int. Cl.: H02K 5/14

(54) **VORRICHTUNG ZUM TRAGEN UND ZUM ELEKTRISCHEN KONTAKTIEREN VON SCHLEIFBÜRSTEN, INSBESONDERE FÜR TURBOGENERATOREN**
SUPPORTING AND ELECTRICALLY CONTACTING DEVICE FOR BRUSHES, SPECIALLY FOR TURBOGENERATORS
DISPOSITIF POUR LE SUPPORT ET LA MISE EN CONTACT ELECTRIQUE DE BALAIS, EN PARTICULIER POUR TURBOGENERATEURS

(30) Priorität: 10.10.1996 DE 19641834
(43) Veröffentlichungstag der Anmeldung: 28.07.1999
(73) Patentinhaber: SIEMENS AKTIENGESELLSCHAFT, 80333 München (DE)
(72) Erfinder: REINHARDT, Helmut, D-45470 Mülheim (DE); BELL, Rolf-Günter, D-45468 Mülheim (DE); BRANDTNER, Michael, D-42799 Leichlingen (DE); MÜLLER, Erwin, D-45136 Essen (DE); PREISSNER, Klaus, D-45470 Mülheim (DE); ROHRER, Herbert, D-47669 Wachtendonk (DE); ZIMMERMANN, Fred, D-45289 Essen (DE)
(86) Internationale Anmeldenummer: DE9702327
(87) Internationale Veröffentlichungsnummer: WO9815998

(56) Entgegenhaltungen:
- FR-A- 1 537 426
- US-A- 1 582 712
- US-A- 2 426 815
- US-A- 3 387 155
- G. IRRESBERGER: "Bürstenwechsel unter Spannung" TECHNISCHE RUNDSCHAU., Bd. 63, Nr. 1, 8.Januar 1971, BERN CH, Seiten 26-29, XP002058344

## Beschreibung

Die vorliegende Erfindung betrifft eine Vorrichtung zum Tragen und zum elektrischen Kontaktieren von Schleifbürsten, mit denen ein schleifender elektrischer Kontakt zu Schleifringen auf einer Welle eines Stromgenerators herstellbar ist. Beim Betrieb von Generatoren wird ein von stationären Einrichtungen ausgehender Erregerstrom auf die Schleifringe der Läuferwelle übertragen.

Vorrichtungen solcher Art sind seit langem bekannt und funktionieren in der Regel auch über lange Zeiträume hinweg zuverlässig. Aus der G 94 00 080.8 ist z.B. eine solche Vorrichtung bekannt, bei der Schleifbürsten zwischen einer Arbeitsposition und einer Ruheposition bewegbar sind. In der Arbeitsposition besteht ein elektrischer Kontakt zwischen den Schleifbürsten und dem Schleifring, in der Ruheposition dagegen nicht. Der sichere elektrische Kontakt in der Arbeitsposition wird durch bewegliche Teile der Vorrichtung und eine Anpreßkraft erreicht.

Bekannt sind aber auch Vorrichtungen der genannten Art mit ortsfesten Teilen zum Tragen von Schleifbürsten. Hierbei kommt es auf einen besonders stabilen Aufbau der Vorrichtung an. In einer bekannten Ausführungsform ist an einer Trägerbasis eine Mehrzahl von Bolzen befestigt. Die Trägerbasis besteht aus Metall, die Bolzen aus einem Isolierwerkstoff. Die Bolzen sind um die Rotationsachse der Welle herum angeordnet. Über jeden Bolzen ist mindestens eine Hülse aus elektrisch leitendem Material geschoben, die der elektrischen Kontaktierung der Schleifbürsten dient. Die Schleifbürsten selbst werden jeweils von einem Halter gehalten, der auf die Hülsen aufsteckbar bzw. von ihnen abziehbar ist. Üblicherweise sind über jeden Bolzen genau zwei Hülsen geschoben, die, aufgrund der isolierenden Wirkung des Bolzens und eines Distanzstückes zwischen den Hülsen, zur Stromübertragung auf zwei verschiedene Schleifringe dienen, welche bei Betrieb des Stromgenerators bzw. des Elektromotors auf unterschiedlichem elektrischen Potential liegen. Die Hülsen zur Stromübertragung auf denselben Schleifring sind jeweils Bestandteile eines Stromverteilers. Zu jeweils einem Stromverteiler gehören weiterhin eine teilweise ringförmige Stromschiene, mit der die Hülsen kurzgeschlossen werden, und eine Stromanschlußschiene mit Bohrungen zum Befestigen und Anschließen einer elektrischen Anschlußleitung. Die Verbindungen der Stromschienen untereinander und der teilweise ringförmigen Stromschiene zu den Hülsen sind durch Nieten oder Schrauben gesichert.

Aus der DE 40 09 851 A1 geht eine Kurzschluß- und Bürstenabhebevorrichtung für Asynchronmotoren mit Schleifringläufer hervor, die weitgehend verschleißfrei arbeitet und unempfindlich gegen Verschmutzungen ist. Durch einen drehbaren Betätigungsring mit Bürstenbetätigungslenkern werden die Bürsten erst abgehoben, wenn die Schleifringe kurzgeschlossen sind.

Die beschriebene Vorrichtung wird mit großer Zuverlässigkeit beim Dauerbetrieb von elektrischen Maschinen eingesetzt. Sie ist jedoch aus bis zu 250 Einzelteilen zusammengesetzt. Da die Montage in der Regel erst am Standort der Maschine stattfindet, ist ein relativ hoher Aufwand für Lagerhaltung und Montage der Bauteile unumgänglich.

Die US-PS 1,582,712 A betrifft einen 3ürstenhalter für elektrische Maschinen. Auf einem elektrisch leitenden Ring sind äquidistant entlang des Umfanges des Ringes parallel zur Ringachse gerichtete Bolzen angeordnet. Mit diesen Bolzen sind elektrische Schleifbürsten mechanisch und elektrisch verbindbar. Der Ring wird äquidistant über seinen Umfang von einer Anzahl magnetischer Elemente umgeben. Jeweils zwei magnetische Elemente schließen somit eine Gruppe von Bolzen ein. Jeder Gruppe von Bolzen wird elektrischer Strom über jeweils eine Leitung zugeführt. Elektrischer Strom, der durch den elektrisch leitfähigen Ring von einer Bolzengruppe in die andere Bolzengruppe fließt, wird bei Durchtritt durch das die Gruppen trennende magnetische Element gedämpft, da durch das magnetische Element für diesen Strom eine hohe Impedanz hervorgerufen wird. Durch diese Aufteilung der Bolzen in Gruppen mittels der magnetischen Elemente wird erreicht, daß die Strompfade zu den einzelnen Steckbürsten im wesentlichen gleich und damit der Strom durch die einzelnen Steckbürsten ebenfalls im wesentlichen gleich ist.

Die FR 1 537 426 A behandelt einen ringförmigen Steckbürstenhalter für elektrische Maschinen. In der FR 1 537 425 A geht es ausschließlich um einen die Steckbürsten halternden und verbindenden Ring. Aufgabe der FR 1 537 425 A ist eine erhöhte Betriebssicherheit. Dies wird dadurch erreicht, daß die elektrisch leitfähige und die Steckbürsten verbindende elektrische Verbindung innerhalb eines isolierenden Ringes geführt wird, der aus zwei einander gegenüberliegenden, unmittelbar aneinander liegenden Ringteilen besteht. Imnerhalb jeweils einer ringförmigen Nut wird ein elektrischer Leiter geführt. Die jeweiligen Kontaktbolzen der Steckbürsten sind mit diesen elektrischen Leitern verbunden.

Der Erfindung liegt die Aufgabe zugrunde, eine Vorrichtung zum Tragen und zum elektrischen Kontaktieren von Schleifbürsten zu schaffen, welche leicht und kostengünstig herzustellen und zu montieren ist bei gleichzeitig hoher Betriebszuverlässigkeit und -sicherheit.

Die erfindungsgemäße Lösung der Aufgabe besteht gemäß Anspruch 1 in dem Vereinen der Funktionen "Tragen" und "Elektrisch Kontaktieren" der Schleifbürsten bzw. der Halter der Schleifbürsten. Auf diese Weise wird gegenüber dem Stand der Technik die Anzahl der Bauteile reduziert sowie die Stabilität und Zuverlässigkeit noch weiter erhöht. Vorteilhafte Ausgestaltungen von erfindungsgemäßen Vorrichtungen sind in den abhängigen Ansprüchen angegeben.

Nach Anspruch 1 ist mehr als einer der Bolzen, die die Schleifbürsten tragen, als ein elektrischer Kontaktbolzen ausgeführt. Durch einen solchen Kontaktbolzen wird sowohl eine tragende Verbindung zwischen mindestens einer Schleifbürste und der Trägerbasis, als auch ein elektrischer Kontakt des bzw. der Schleifbürsten zu einem Stromverteiler hergestellt. Zur Kontaktierung der Schleifbürste bzw. Schleifbürsten dient eine Kontaktfläche des Kontaktbolzens, die beispielsweise die Randfläche einer Bohrung in dem Kontaktbolzen sein kann. Vorteilhafterweise weist der Kontaktbolzen aber keine Bohrung auf, sondern besteht massiv aus einem elektrisch leitfähigen Material, vorzugsweise aus Stahl, wobei die Kontaktfläche durch die Außenfläche des Bolzens gebildet wird. Der Kontaktbolzen ist an der Trägerbasis befestigt, die zumindest im Bereich der Verbindungsstellen zu den Kontaktbolzen elektrisch isolierend ist. Die Trägerbasis kann aber auch vollständig aus einem isolierenden Material bestehen. Für die Kontaktbolzen und die Trägerbasis müssen somit nicht mehr als zwei verschiedene Materialien verwendet werden. Diese mögliche Reduzierung der Werkstoffvielfalt des Standes der Technik öffnet das Tor zu einer Reihe von Vorteilen bei der Herstellung der Bauteile und bei der Montage der Vorrichtung.

In einer vorteilhaften Ausgestaltung der Vorrichtung werden Kontaktbolzen, die Bestandteil desselben Stromverteilers sind, durch einen starren Verteilerring miteinander verbunden. Wie ein Kontaktbolzen erfüllt auch der Verteilerring zwei unterschiedliche Funktionen: er schließt die Kontaktbolzen miteinander kurz und sorgt für eine stabile Verbindung. Der Verteilerring kann aus demselben Material, insbesondere aus Stahl, wie die Kontaktbolzen gefertigt werden, in welchem Fall sich die Zahl der verwendeten Werkstoffe nicht erhöht. Vorzugsweise werden durch den Verteilerring alle Kontaktbolzen desselben Stromverteilers miteinander verbunden, wodurch ein besonders stabiler Stromverteiler entsteht.

Um die Dauerhaftigkeit dieser Verbindung zu gewährleisten, aber auch aus Gründen der Montagefreundlichkeit, wird in besonderer Ausgestaltung der Erfindung vorgesehen, möglichst viele dieser Verbindungen durch Schweißen zu sichern. Dasselbe wird für etwaige Verbindungen der Kontaktbolzen mit weiteren Bestandteilen des Stromverteilers vorgesehen. Bei sorgfältiger Ausführung der Schweißarbeiten kann mit einer zuverlässigen mechanischen Festigkeit und niedrigem elektrischen Widerstand innerhalb des Stromverteilers über seine gesamte Lebenszeit hinweg gerechnet werden, insbesondere auch bei starken Vibrationen.

Die Verwendung eines Verteilerringes ist nicht auf eine erfindungsgemäße Vorrichtung beschränkt. Es ist beispielsweise ebenso möglich, bei Vorrichtungen nach dem beschriebenen Stand der Technik die Hülsen durch einen Verteilerring zu verbinden.

Der gute elektrische Kontakt eines Stromverteilers zu den Schleifbürsten und zu mindestens einer elektrischen Anschlußleitung ist Voraussetzung für ein effizientes Funktionieren eines Stromgenerators oder eines Elektromotors. Aus diesem Grund wird weiterhin als günstig vorgesehen, daß ein Stromverteiler eine gelochte Anschlußklemme zum Befestigen mindestens einer elektrischen Anschlußleitung aufweist und daß die Anschlußklemme und die Kontaktflächen der Kontaktbolzen des Stromverteilers verzinnt sind. Andere Maßnahmen um einen guten elektrischen Kontakt zu gewährleisten, können die Verwendung korrosionsarmer Werkstoffe, beispielsweise Edelstahl, und/oder die Verwendung von Materialpaarungen Anschlußleitung-Verteilerring bzw. Verteilerring-Schleifbürstenhalter mit gleicher Elektronenaustrittsarbeit sein.

Bei einer einfachen und gleichzeitig stabilen Ausführung einer Trägerbasis weist diese eine Trägerwand auf mit einem Ausschnitt für die Welle mit Schleifringen.

Vorteilhaft für den Aufbau des Verteilerringes ist es, wenn er Kontaktbolzen enthält, die Längsachsen besitzen, welche parallel zur Rotationsachse der Welle ausgerichtet sind. Auf diese Weise können gleichartige Schleifbürstenhalter wie beim Stand der Technik verwendet werden, die in einer zur Rotationsachse der Welle radialen Richtung von außen nach innen auf einen Bolzen gesteckt werden. In einer weiteren vorteilhaften Ausgestaltung der erfindungsgemäßen Vorrichtung befinden sich alle Längsachsen der Kontaktbolzen in ungefähr demselben Abstand zur Rotationsachse der Welle. Auf diese Weise können bei jedem Kontaktbolzen die gleichen Schleifbürstenhalter und Schleifbürsten verwendet werden. Bei einem Auswechseln der Schleifbürsten muß daher nicht auf die Art des Halters oder die Art der Schleifbürste geachtet werden.

Eine montagefreundliche und zuverlässige Art der Befestigung von Kontaktbolzen an der Trägerbasis besteht in einer Verschraubung der Kontaktbolzen. Diese weisen jeweils an einem Ende ein Außengewinde auf, wobei das Ende jeweils in ein Gewindeloch der Trägerbasis geschraubt ist. Wird anschließend an den jeweils anderen Enden der Kontaktbolzen, wie beschrieben, ein starrer Verteilerring befestigt, dann werden dadurch die Verschraubungen gesichert. Falls der Verteilerring mit den Kontaktbolzen verschweißt wird, ergibt sich eine durch Vibrationen oder Schwingungen unlösbare Verbindung auch zwischen den Kontaktbolzen und der Trägerbasis.

Bei einer weiteren Ausgestaltung weist die Vorrichtung zwei Stromverteiler, die aufgrund der isolierenden Eigenschaft der Trägerbasis in den Bereichen der Verbindungsstellen zu den Kontaktbolzen voneinander elektrisch isoliert sind. Diese beiden Stromverteiler sind an zwei gegenüberliegenden Außenseiten der Trägerbasis oder eines von einer Mehrzahl von Basisteilen der Trägerbasis befestigt, wobei die Außenseiten in etwa in die beiden entgegengesetzten Richtungen der Rotationsachse der Welle orientiert sind. Auf diese Weise können elektrische Kontakte zu zwei Schleifringen auf unterschiedlichem elektrischen Potential hergestellt werden, wobei die dabei verwendeten Vorrichtungsteile wie beschrieben von derselben Trägerbasis bzw. demselben Basisteil getragen werden. Dieses Ein-Träger-Prinzip ist bereits bei dem genannten Stand der Technik verwirklicht. Jedoch befinden sich beide Stromverteiler auf derselben Außenseite der Trägerbasis bzw. des Basisteils. Durch die Erfindung können somit die durch die Bolzen gebildeten Hebelarme auf die halbe Länge reduziert werden. Kürzere Bolzen sind deshalb vorteilhaft, weil so durch Vibrationen weniger leicht Eigenschwingungen mit großen Schwingungsamplituden angeregt werden können.

In einer weiteren speziellen Ausgestaltung der Erfindung ist die Anordnung der beiden Stromverteiler im wesentlichen spiegelsymmetrisch zur Trägerbasis bzw. eines Basisteils, jedoch mit Ausnahme der Befestigungsstellen der Kontaktbolzen, die gegeneinander versetzt sind. Ein Vorteil ist, daß für beide Stromverteiler die gleichen Bauteile verwendet werden können. Durch das Versetzen der Befestigungsstellen kann auch die Trägerbasis entsprechend dünner ausgelegt werden, so daß Material und Platz gespart werden können.

Beispielsweise um eine besonders stabile Befestigung eines Stromverteilers mit Kontaktbolzen zu erzielen, kann der Stromverteiler zwischen zwei Basisteilen einer geteilten Trägerbasis angeordnet werden, wobei die Kontaktbolzen teilweise an dem einen Basisteil und teilweise an dem anderen Basisteil befestigt werden. Ein anderer Vorteil dieser Ausführungsart einer erfindungsgemäßen Vorrichtung ist darin zu sehen, daß, bei dennoch vibrationsfester Konstruktion, wesentlich längere Kontaktbolzen verwendet werden können und daß somit eine wesentlich größere Anzahl von Schleifbürsten getragen werden kann, was bei manchen Stromgeneratoren oder Elektromotoren erforderlich ist.

Aus Sicherheitsgründen sind die Stromverteiler und die Welle eines Stromgenerators oder eines Elektromotors mit einer Berührschutzeinrichtung zu versehen. Hier wird eine Berührschutzhaube vorgeschlagen, die mit der Trägerbasis verbunden ist und die die Welle und die Stromverteiler oben und an den horizontal quer zur Rotationsachse der Welle liegenden Seiten umgibt. Solch eine Berührschutzhaube ist bereits aus dem Stand der Technik bekannt. Neu und besonders vorteilhaft ist jedoch eine Berührschutzhaube für die oben beschriebene Ausführungsvariante mit zwei Stromverteilern an zwei gegenüberliegenden Außenseiten der Trägerbasis bzw. eines Basisteils. Sie ist in Richtung der Rotationsachse der Welle an beiden Enden offen, so daß dort Luft horizontal unter die Berührschutzhaube strömen kann, mit dem Ergebnis, daß auf eine Zwangsbelüftung durch Gebläse oder andere aktive Einrichtungen verzichtet werden kann.

Das Erreichen dieses Ergebnisses wird bei einer Weiterbildung dadurch unterstützt, daß die Berührschutzhaube oben und/oder an den Seiten horizontal quer zur Rotationsachse der Welle eine Mehrzahl von fensterartigen Öffnungen aufweist, deren Größe derart bemessen ist, daß ein Durchgreifen zum Stromverteiler erschwert oder unmöglich ist, daß jedoch eine natürliche Konvektionsbewegung von Luft aufgrund einer Wärmeentwicklung an den Schleifbürsten durch die Öffnungen hindurch möglich ist.

Die Berührschutzhaube, mit oder ohne fensterartige Öffnungen, kann auch aus mehreren Teilen bestehen, die nur über die Trägerbasis miteinander verbunden sind.

Bei geeigneter Auslegung einer Berührschutzhaube mit solchen fensterartigen Öffnungen, kann unter Umständen auch bei Vorrichtungen nach dem Stand der Technik auf die aktive Belüftung verzichtet werden, obwohl die Berührschutzhaube möglicherweise in Richtung der Rotationsachse der Welle an beiden Enden geschlossen ist, oder nur an einem offenen Ende Luft horizontal unter die Berührschutzhaube strömen kann.

Bevorzugte Ausführungsbeispiele der Erfindung, auf die diese jedoch nicht beschränkt ist, sind in der Zeichnung dargestellt und werden im folgenden näher beschrieben.

Es zeigen:
- Fig. 1: ein Ausführungsbeispiel mit einer Trägerwand und zwei elektrisch voneinander isolierten Stromverteilern in perspektivischer Darstellung,
- Fig. 2: einen Bereich einer Trägerbasis mit einem dort befestigten Kontaktbolzen und einer verschweißten Befestigung eines starren Vertei-lerringes am anderen Ende des Kontaktbolzens,
- Fig. 3: die Frontalansicht auf eine Trägerbasis mit einem daran befestigten Stromverteiler mit Verteilerring,
- Fig. 4: eine Trägerbasis mit zwei daran befestigten Stromverteilern in im wesentlichen spiegelsymmetrischer Anordnung zur Trägerbasis,
- Fig. 5: eine Trägerbasis mit zwei Basisteilen, zwischen denen ein Stromverteiler angeordnet ist, und
- Fig. 6: ein Ausführungsbeispiel mit einer erfindungsgemäßen Berührschutzhaube.

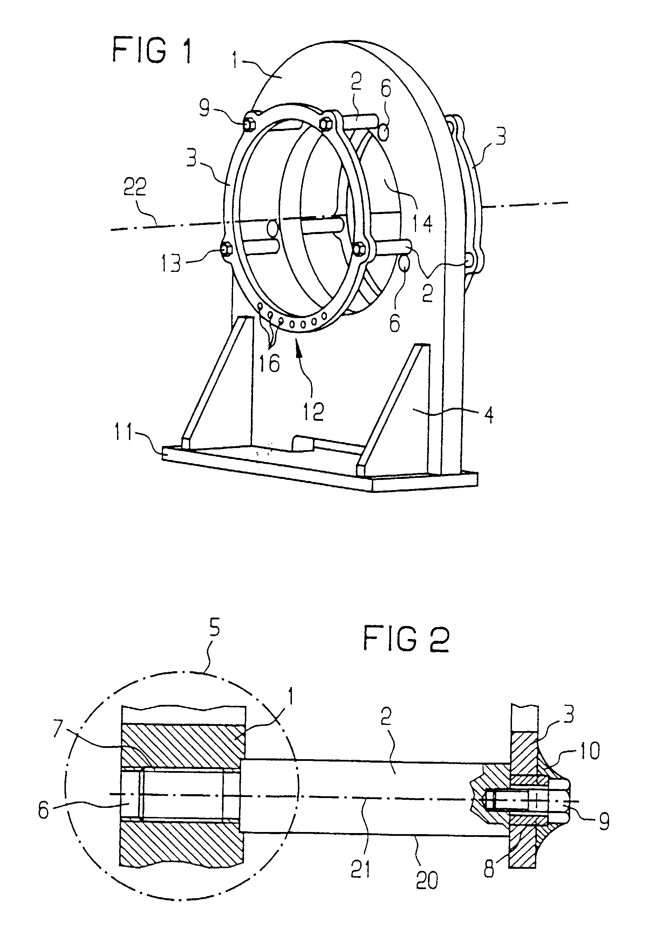

Fig. 1 zeigt eine Trägerbasis 1 mit Trägerfüßen 4 und einer Bodenplatte 11. Die Bodenplatte 11 kann beispielsweise an einem Boden verschraubt werden, um einen sicheren und festen Stand der Trägerbasis 1 zu gewährleisten. Die Trägerbasis 1 weist eine oben halbkreisartig abgerundete Trägerwand auf, die einen annähernd kreisförmigen Ausschnitt 14 für eine Welle mit Schleifringen aufweist. Die Rotationtsachse 22 der Welle steht senkrecht zu den beiden parallelen Außenseiten der Trägerwand und durchstößt den kreisförmigen Ausschnitt 14 etwa in seiner Mitte. Anstelle eines kreisförmigen Ausschnitts 14 sind jedoch auch anders geformte Ausschnitte möglich, um beispielsweise Wandmaterial zu sparen oder eine natürliche Konvektionsbewegung von Luft durch den Ausschnitt hindurch zu begünstigen. An beiden Aussenseiten der Trägerwand befindet sich jeweils ein Stromverteiler 17 mit jeweils vier Kontaktbolzen 2, die an der Trägerwand befestigt sind. Dabei liegen die Befestigungsstellen der beiden Stromverteiler 17 nicht einander gegenüber, sondern sind gegeneinander versetzt. Ansonsten ist die Anordnung der beiden Stromverteiler 17 spiegelsymmetrisch zur Trägerbasis 1. An den von der Trägerbasis 1 entfernt liegenden Enden der Kontaktbolzen 2 ist je Stromverteiler 17 ein Verteilerring 3 befestigt. An den Befestigungsstellen weisen die Verteilerringe 3 Ringausbuchtungen 13 auf. Unten sind die Verteilerringe 3 als Anschlußklemmen 12 mit Befestigungslöchern 16 für den Anschluß von elektrischen Anschlußleitungen ausgeführt.

In dem gezeigten Ausführungsbeispiel besteht die Trägerwand einstückig aus einem isolierenden Material. Möglich sind jedoch auch andere Ausführungsformen der Trägerbasis 1, z.B. in Strebenkonstruktion, wobei die Streben aus Metall bestehen und Bereiche aus Isoliermaterial tragen, die der Befestigung der Kontaktbolzen 2 dienen.

Ein Ausführungsbeispiel für die Befestigungen der Kontaktbolzen 2, sowohl an der Trägerbasis 1 als auch an einem Verteilerring 3 ist in Fig. 2 dargestellt. Die Trägerbasis 1 besteht im Bereich 5 der Verbindungsstelle zu dem Kontaktbolzen 2 aus einem isolierenden Material. Sie weist eine durchgehende Bohrung 6 mit einem Innengewinde auf, in das der Kontaktbolzen 2 mit einem Außengewinde 7 an einem Ende verschraubt ist. Sein anderes Ende steckt in einer Bohrung 8 eines Verteilerringes 3. Bei der Montage des Verteilerringes 3 wurde die Verbindung zu dem Kontaktbolzen 2 zunächst durch ein Befestigungsteil 9, beispielsweise eine Schraube, gesichert und anschließend stirnseitig verschweißt. Die Schweißnaht 10 liegt dementsprechend am Ende des Kontaktbolzens. Das Ausführungsbeispiel enthält einen im wesentlichen zylindrischen Kontaktbolzen 2 mit einer Längsachse 21 und einer äußeren Kontaktfläche 20.

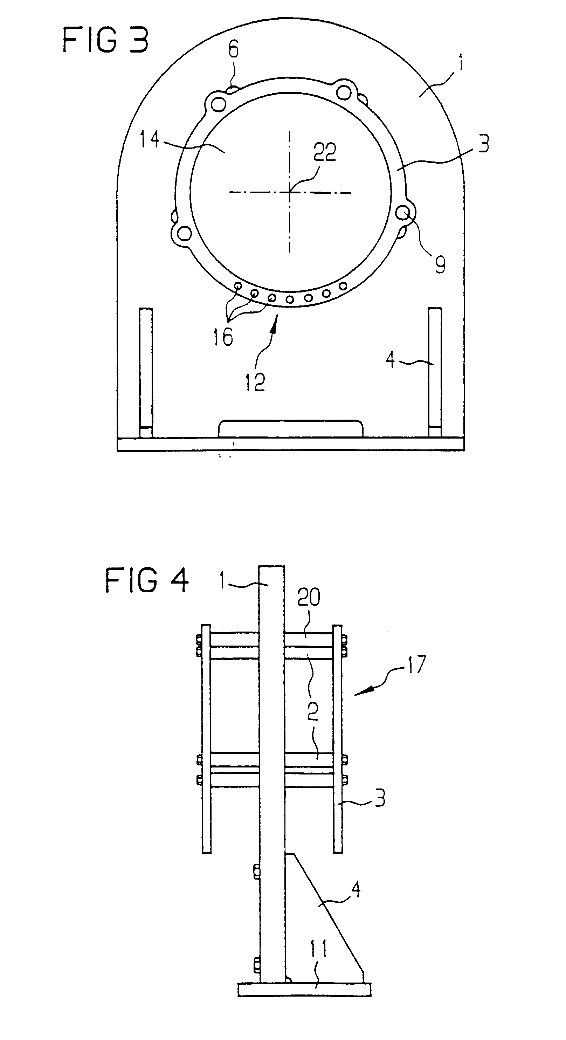

Fig. 3 verdeutlicht, daß für die beiden Stromverteiler 17 des in Fig. 1 gezeigten Ausführungsbeispiels die gleichen Bauteile verwendet werden können. Die Befestigungsstellen der Kontaktbolzen 2 sind gegeneinander versetzt, jedoch sind die beiden Verteilerringe 17 gleich aufgebaut, wie man an den Positionen der Befestigungsteile 9 und der Bohrungen 6 in der Trägerbasis erkennt. Derselbe Sachverhalt ist auch aus der in Fig. 4 dargestellten Seitenansicht des Ausführungsbeispiels ersichtlich.

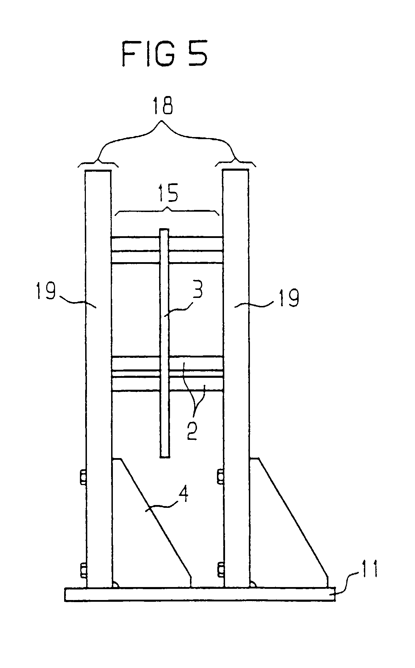

Fig. 5 zeigt ein zweites Ausführungsbeispiel für die erfindungsgemäße Vorrichtung. Ein Stromverteiler 25 ist zwischen zwei Basisteilen 19 einer geteilten Trägerbasis 18 angeordnet. Die beiden Basisteile 19 werden durch Trägerfüße 4 abgestützt und sind auf derselben Bodenplatte 11 befestigt. Der Stromverteiler 25 weist in der Mitte zwischen den beiden Basisteilen 19 einen Verteilerring 3 auf, der mit allen Kontaktbolzen 2 verbunden ist.

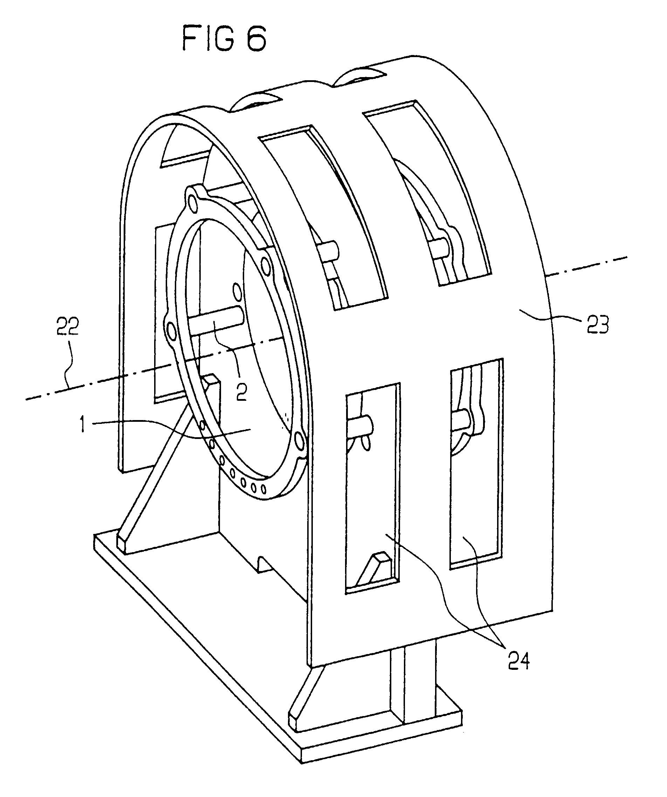

In Fig. 6 ist eine erfindunsgemäße Vorrichtung mit einer an der Trägerbasis 1 befestigten Berührschutzhaube 23 zu sehen, die längliche fensterartige Öffnungen 24 aufweist. Die Berührschutzhaube 23 umgibt die beiden Stromverteiler 17 oben und an den horizontal quer zur Rotationsachse 22 einer Welle liegenden Seiten. Sie ist in Richtung der Rotationsachse an beiden Enden offen, so daß dort Luft horizontal unter die Berührschutzhaube strömen kann.

Durch Kombination der beiden in den Ausführungsbeispielen gezeigten Konstruktionen einer erfindungsgemäßen Vorrichtung läßt sich, bei Beibehaltung des Konstruktionsprinzips, eine Vorrichtung für jede mögliche Schleifbürstenzahl und Schleifbürstenanordnung konstruieren. Das Konstruktionsprinzip ist somit universell bei Stromgeneratoren und Elektromotoren mit einer Welle anwendbar.

## Patentansprüche

1. Vorrichtung zum Tragen und zum elektrischen Kontaktieren von Schleifbürsten, mit denen ein schleifender elektrischer Kontakt zu Schleifringen auf einer Welle eines Stromgenerators oder eines Elektromotors herstellbar ist, wobei die Vorrichtung einen Träger aufweist, der wiederum eine Trägerbasis (1; 18) und eine Mehrzahl von daran befestigten Bolzen aufweist, über die jeweils mindestens eine Schleifbürste tragend mit der Trägerbasis (1; 18) verbindbar ist, und wobei die Vorrichtung mindestens einen Stromverteiler (17; 25) aufweist, der mit mindestens zwei Schleifbürsten kurzschließend elektrisch kontaktierbar ist und an den mindestens eine elektrische Anschlußleitung anschließbar ist,
**dadurch gekennzeichnet,** daß mehr als einer der Bolzen als ein elektrischer Kontaktbolzen (2) mit einer Kontaktfläche (20) Bestandteil des mindestens einen Stromverteilers (17; 25) ist, so daß über ihn mindestens eine Schleifbürste sowohl tragend verbindbar als auch elektrisch kontaktierbar ist, und daß die Trägerbasis (1; 18) zumindest in Bereichen (5) der Verbindungsstellen zu den Kontaktbolzen (2) elektrisch isolierend ist.

2. Vorrichtung nach Anspruch 1,
**dadurch gekennzeichnet,** daß mindestens ein Teil, vorzugsweise jedoch alle der Kontaktbolzen (2), die Bestandteil des mindestens einen Stromverteilers (17; 25) sind, durch einen starren Verteilerring (3) stabilisierend und kurzschließend miteinander verbunden sind.

3. Vorrichtung nach Anspruch 1 oder 2,
**dadurch gekennzeichnet,** daß mindestens zwei, vorzugsweise jedoch alle Kontaktbolzen (2) des mindestens einen Stromverteilers (17; 25) durch Schweißnähte (10) mit anderen Bestandteilen des Stromverteilers (17; 25) verbunden sind.

4. Vorrichtung nach Anspruch 1, 2 oder 3,
**dadurch gekennzeichnet,** daß der mindestens eine Stromverteiler (17; 25) eine gelochte Anschlußklemme (12) zum Befestigen der mindestens einen elektrischen Anschlußleitung aufweist und daß die Anschlußklemme (12) und/oder die Kontaktflächen (20) des mehr als einen Kontaktbolzens (2) des Stromverteilers (17; 25) verzinnt sind.

5. Vorrichtung nach einem der Ansprüche 1 bis 4,
**dadurch gekennzeichnet,** daß die Trägerbasis (1; 18) eine Trägerwand aufweist, die einen Ausschnitt (14) für die Welle mit Schleifringen aufweist.

6. Vorrichtung nach einem der Ansprüche 1 bis 5,
**dadurch gekennzeichnet,** daß die Kontaktbolzen (2) Längsachsen (21) besitzen, die parallel zur Rotationsachse (22) der Welle ausgerichtet sind.

7. Vorrichtung nach der Anspruch 6,
**dadurch gekennzeichnet,** daß die Längsachsen alle in ungefähr demselben Abstand zur Rotationsachse der Welle liegen.

8. Vorrichtung nach einem der Ansprüche 1 bis 7,
**dadurch gekennzeichnet,** daß die Kontaktbolzen (2) an jeweils einem Ende ein Außengewinde (7) aufweisen und daß das Ende jeweils in ein Gewindeloch (6) der Trägerbasis (1; 18) geschraubt ist.

9. Vorrichtung nach einem der Ansprüche 1 bis 8,
**dadurch gekennzeichnet,** daß sie zwei Stromverteiler (17) mit Kontaktbolzen (2) aufweist, die aufgrund der isolierenden Eigenschaft der Trägerbasis (1; 18) in den Bereichen (5) der Verbindungsstellen zu den Kontaktbolzen (2) voneinander elektrisch isoliert sind, und daß die Stromverteiler (17) an zwei gegenüberliegenden Außenseiten der Trägerbasis (1) oder eines Basisteils (19) befestigt sind, wobei die Außenseiten in etwa in die beiden entgegengesetzten Richtungen der Rotationsachse der Welle orientiert sind.

10. Vorrichtung nach dem vorhergehenden Anspruch,
**dadurch gekennzeichnet,** daß die Anordnung der beiden Stromverteiler (17) im wesentlichen spiegelsymmetrisch zur Trägerbasis (1) oder eines Basisteils (19) ist, jedoch mit Ausnahme der Befestigungsstellen der Kontaktbolzen (2), die gegeneinander versetzt sind.

11. Vorrichtung nach einem der Ansprüche 1 bis 10,
**dadurch gekennzeichnet,** daß ein Stromverteiler (17; 25) mit Kontaktbolzen (2) zwischen zwei Basisteilen (19) einer geteilten Trägerbasis (18) angeordnet ist, wobei die Kontaktbolzen (2) teilweise an dem einen Basisteil (19) und teilweise an dem anderen Basisteil (19) befestigt sind.

12. Vorrichtung nach Anspruch 9 oder 10,
**dadurch gekennzeichnet,** daß mit der Trägerbasis (1; 18) eine Berührschutzhaube (23) verbunden ist, die die Welle und die beiden Stromverteiler (17; 25) oben und an den horizontal quer zur Rotationsachse (22) der Welle liegenden Seiten umgibt, und daß die Berührschutzhaube (23) in Richtung der Rotationsachse (22) an beiden Enden offen ist, so daß dort Luft horizontal unter die Berührschutzhaube strömen kann.

13. Vorrichtung nach dem vorhergehenden Anspruch,
**dadurch gekennzeichnet,** daß die Berührschutzhaube (23) oben und an beiden Seiten horizontal quer zur Rotationsachse (22) der Welle eine Mehrzahl von fensterartigen Öffnungen (24) aufweist und daß die Größe der Öffnungen derart bemessen ist, daß ein Durchgreifen zum Stromverteiler (17; 25) erschwert oder unmöglich ist, daß jedoch eine natürliche Konvektionsbewegung von Luft aufgrund einer Wärmeentwicklung an den Schleifbürsten durch die Öffnungen hindurch möglich ist.

## Claims

1. Arrangement for supporting and for electrically contacting brushes with which a looping electrical contact to sliprings on a shaft of a current generator or an electric motor can be produced, the arrangement having a support which in turn has a supporting base (1; 18) and a plurality of pins fastened thereto, by way of which in each case at least one brush can be connected in a supporting manner to the supporting base (1; 18), and the arrangement having at least one current distributor (17; 25) which can be electrically contacted in a short-circuiting manner to at least two brushes and to which at least one electrical connecting line can be connected,
characterised in that more than one of the pins as an electrical contact pin (2) having a contact face (20) is a component of the at least one current distributor (17; 25), so that by way of this pin at least one brush can be both connected in a supporting manner and electrically contacted, and in that the supporting base (1; 18) is electrically insulating at least in regions (5) of the points of connection to the contact pins (2).

2. Arrangement according to claim 1,
characterised in that at least some, preferably, however, all of the contact pins (2) which are a component of the at least one current distributor (17; 25) is/are connected to each other in a stabilising and short-circuiting manner by a rigid distributor ring (3).

3. Arrangement according to claim 1 or 2,
characterised in that at least two, preferably, however, all of the contact pins (2) of the at least one current distributor (17; 25) are connected to other components of the current distributor (17; 25) by weld seams (10).

4. Arrangement according to claim 1, 2 or 3,
characterised in that the at least one current distributor (17; 25) has a perforated terminal (12) for fastening the at least one electrical connecting line, and in that the terminal (12) and/or the contact faces (20) of the more than one contact pin (2) of the current distributor (17; 25) are tin-plated.

5. Arrangement according to one of claims 1 to 4,
characterised in that the supporting base (1; 18) has a supporting wall which has a cutout (14) for the shaft with sliprings.

6. Arrangement according to one of claims 1 to 5,
characterised in that the contact pins (2) have longitudinal axes (21) which are aligned in parallel with the rotational axis (22) of the shaft.

7. Arrangement according to claim 6,
characterised in that the longitudinal axes all lie at substantially the same distance from the rotational axis of the shaft.

8. Arrangement according to one of claims 1 to 7,
characterised in that the contact pins (2) have at one end in each case an external thread (7), and in that the end is screwed in each case into a threaded hole (6) of the supporting base (1; 18).

9. Arrangement according to one of claims 1 to 8,
characterised in that it has two current distributors (17) having contact pins (2), which current distributors, on the basis of the insulating property of the supporting base (1; 18), are electrically insulated with respect to each other in the regions (5) of the points of connection to the contact pins (2), and in that the current distributors (17) are fastened to two opposing outer sides of the supporting base (1) or of a base portion (19), the outer sides being oriented in substantially the two opposing directions of the rotational axis of the shaft.

10. Arrangement according to the preceding claim, characterised in that the disposition of the two current distributors (17) is substantially mirror-symmetrical with respect to the supporting base (1) or a base portion (19), but with the exception of the fastening points of the contact pins (2), which are staggered with respect to each other.

11. Arrangement according to one of claims 1 to 10, characterised in that a current distributor (17; 25) having contact pins (2) is arranged between two base portions (19) of a divided supporting base (18), with the contact pins (2) being fastened partly on the one base portion (19) and partly on the other base portion (19).

12. Arrangement according to claim 9 or 10,
characterised in that connected to the supporting base (1; 18) is a contact-protection hood (23), which surrounds the shaft and the two current distributors (17; 25) at the top and on the sides which lie horizontally at right angles to the rotational axis (22) of the shaft, and in that the contact-protection hood (23) is open at both ends in the direction of the rotational axis (22), so that air can there flow horizontally under the contact-protection hood.

13. Arrangement according to the preceding claim, characterised in that at the top and on both sides horizontally at right angles to the rotational axis (22) of the shaft, the contact-protection hood (23) has a plurality of window-like openings (24), and in that the size of the openings is dimensioned in such a way that a penetration to the current distributor (17; 25) is made more difficult or impossible, but, however, a natural convective movement of air through the openings because of a development of heat at the brushes is possible.

## Revendications

1. Dispositif pour le support et la mise en contact électrique de balais qui permettent de réaliser un contact électrique par frottement avec des bagues collectrices sur un arbre d'une génératrice ou d'un moteur électrique, le dispositif comprenant un support qui comporte lui-même une base (1 ; 18) de support et une pluralité de boulons fixés sur cette base, au moyen desquels au moins un balai respectif peut être assemblé à la base (1 ; 18) de support en étant supporté par cette dernière, et le dispositif comportant au moins un répartiteur (17 ; 25) de courant, qui peut être mis en contact électrique de court-circuitage avec au moins deux balais et auquel peut être raccordée au moins une ligne de raccordement électrique,
caractérisé en ce que plus d'un des boulons fait partie, en tant que boulon (2) de contact électrique pourvu d'une face (20) de contact, du ou de chaque répartiteur (17 ; 25), de sorte qu'il permet à la fois d'assembler au moins un balai en le supportant et de le mettre en contact électrique, et en ce que la base (1 ; 18) de support est électriquement isolante au moins dans les régions (5) des points d'assemblage avec les boulons (2) de contact.

2. Dispositif suivant la revendication 1, caractérisé en ce qu'au moins une partie, mais de préférence la totalité des boulons (2) de contact qui font partie du ou de chaque répartiteur (17 ; 25) sont mutuellement reliés avec court-circuitage et stabilisation par une bague (3) de répartition rigide.

3. Dispositif suivant la revendication 1 ou 2, caractérisé en ce qu'au moins deux, mais de préférence la totalité des boulons (2) de contact du ou de chaque répartiteur (17 ; 25) sont reliés par des soudures (10) à d'autres éléments du répartiteur (17 ; 25).

4. Dispositif suivant la revendication 1, 2 ou 3, caractérisé en ce que le ou chaque répartiteur (17 ; 25) comporte une borne (12) de raccordement à trous pour la fixation de la ou des lignes de raccordement électrique, et/ou les faces (20) de contact des boulons (2) de contact, en nombre supérieur à un, du répartiteur (17 ; 25) sont étamées.

5. Dispositif suivant l'une des revendications 1 à 4, caractérisé en ce que la base (1 ; 18) de support comporte une paroi de support qui comprend une découpure (14) pour l'arbre pourvu des bagues collectrices.

6. Dispositif suivant l'une des revendications 1 à 5, caractérisé en ce que les boulons (2) de contact possèdent des axes (21) longitudinaux qui sont orientés parallèlement à l'axe (22) de rotation de l'arbre.

7. Dispositif suivant la revendication 6, caractérisé en ce que les axes longitudinaux se trouvent tous approximativement à la même distance de l'axe de rotation de l'arbre.

8. Dispositif suivant l'une des revendications 1 à 7, caractérisé en ce que les boulons (2) de contact comportent un filetage (7) extérieur à une extrémité respective, et en ce que l'extrémité peut être respectivement vissée dans un trou (6) taraudé de la base (1 ; 18) de support.

9. Dispositif suivant l'une des revendications 1 à 8, caractérisé en ce qu'il comprend deux répartiteurs (17) pourvus de boulons (2) de contact, qui sont isolés électriquement l'un de l'autre du fait du caractère isolant de la base (1 ; 18) de support dans les régions (5) des points d'assemblage avec les boulons (2) de contact, et en ce que les répartiteurs (17) sont fixés sur deux côtés extérieurs opposés de la base (1) de support ou d'une partie (19) de base, les côtés extérieurs étant orientés approximativement dans les deux directions opposées de l'axe de rotation de l'arbre.

10. Dispositif suivant la revendication précédente, caractérisé en ce que la disposition des deux répartiteurs (17) est essentiellement symétrique par rapport à la base (1) de support ou à une partie (19) de base, à l'exception toutefois des points de fixation des boulons (2) de contact, qui sont mutuellement décalés.

11. Dispositif suivant l'une des revendications 1 à 10, caractérisé en ce qu'un répartiteur (17 ; 25) pourvu de boulons (2) de contact est disposé entre deux parties (19) de base d'une base (18) de support en deux parties, les boulons (2) de contact étant fixés pour partie sur une partie (19) de base et pour partie sur l'autre partie (19) de base.

12. Dispositif suivant la revendication 9 ou 10, caractérisé en ce qu'un capot (23) de protection contre les contacts accidentels est assemblé à la base (1 ; 18) de support, capot qui entoure l'arbre et les deux répartiteurs (17 ; 25) sur le dessus et sur les côtés qui sont, dans le plan horizontal, transversaux à l'axe (22) de rotation de l'arbre, et en ce que le capot (23) de protection contre les contacts accidentels est ouvert aux deux extrémités dans la direction de l'axe (22) de rotation de l'arbre, de sorte que de l'air peut s'écouler horizontalement en dessous du capot.

13. Dispositif suivant la revendication précédente, caractérisé en ce que le capot (23) de protection contre les contacts accidentels comporte, sur le dessus et sur les deux côtés qui sont, dans le plan horizontal, transversaux à l'axe (22) de rotation de l'arbre, une pluralité d'ouvertures (24) du genre fenêtres, et en ce que la taille des ouvertures est calculée de telle sorte qu'il est difficile voire impossible d'atteindre le répartiteur (17 ; 25), mais qu'un déplacement d'air par convection naturelle, sur la base d'un dégagement de chaleur au niveau des balais, peut s'effectuer par ces ouvertures.
